# EUROPEAN PATENT SPECIFICATION

(11) **EP 2 109 530 B1**
(45) Date of publication and mention of the grant of the patent: **10.07.2013**
(21) Application number: 08707733.5
(22) Date of filing: 15.02.2008
(51) Int. Cl.: B29C 70/44, B29C 70/20

(54) **PROCESS FOR OBTAINING A BALLISTIC-RESISTANT MOULDED ARTICLE**
VERFAHREN ZUR HERSTELLUNG EINES SCHUSSSICHEREN FORMARTIKELS
PROCÉDÉ DE FABRICATION D'UN ARTICLE MOULÉ RÉSISTANT AUX BALLES

(30) Priority: 16.02.2007 EP 07003314
(43) Date of publication of application: 21.10.2009
(73) Proprietor: DSM IP Assets B.V., 6411 TE Heerlen (NL)
(72) Inventor: VAN ES, Martin, Antonius, NL-6443 ED Brunssum (NL); VAN ELBURG, Johann, NL-6374 KC Landgraaf (NL); ROOVERS, William, Adrianus, Cornelis, NL-6132 HD Sittard (NL)
(74) Representative: Steffanie, Leonardus Gerardus
(86) International application number: PCT/EP2008/001160
(87) International publication number: WO 2008/098771

(56) References cited:
- EP-A- 0 017 452
- WO-A-02/058916
- WO-A-2004/039565
- US-B1- 6 389 594
- US-B1- 6 893 704

## Description

The invention relates to a processor the manufacture of a ballistic-resistant moulded article which may for instance be used as a ballistic-resistant helmet, as insert in bullet-proof vests, as armouring on military vehicles and in ballistic-resistant panels.

A ballistic-resistant moulded article and a process for the manufacture thereof is known from US 4,613,535. This publication discloses the manufacture of an article by stacking sheets comprising monolayers of reinforcing fibers onto a rigid layer, followed by compression moulding in a press. In the sheets, the reinforcing fibers are embedded in a thermoplastic matrix, the matrix having a modulus of less than 41 MPa. The rigid layer may be produced by impregnating a fabric of reinforcing fibers with a general purpose epoxy resin followed by curing under pressure. In particular, according to US 4,613,535 a ballistic-resistant moulded article is obtained by stacking sheets comprising monolayers of unidirectional high performance polyethylene (HPPE) fibers in a matrix onto the cured rigid layer, and compressing the whole assembly between two platens in a hydraulic press.

Disadvantage of the process according to US 4,613,535 is that it produces moulded articles, and in particular curved moulded articles, such as a helmet, having ballistic-resistance properties showing a relatively large variation over the surface thereof. In other words the ballistic resistance varies to a relatively large extent with position on the (curved) moulded part. This is undesirable, since a projectile may by chance hit a spot on the moulded article with much less than average performance. US-B-6093704 discloses the pressing of Dyneema⁽™⁾ SK66 LiHMPE fibres in a Kraton⁽™⁾ matrix to obtain a ballistic resistant moulded articles.

The level of ballistic protection is usually expressed by means of the V₅₀. V₅₀ is the velocity of the projectiles fired at the moulded article at which 50% of the projectiles fully penetrate the moulded article. Although in principle any projectile may be used to test ballistic-resistant properties, the V₅₀ is here and hereinafter understood to mean the V₅₀ on impact of a bullet of type AK-47 Mild Steel Core (MSC) point, unless otherwise specified, Such bullets, available from several suppliers such as Sellier & Belliot, have dimensions of 7.62x39 mm with a Mild Steel Core (MSC) and are in the art often -in short- referred to as 'AK47 bullets'. Moulded articles with curved shapes, such as helmets in particular, are notorious for the difficulties encountered in producing these with minor variation in ballistic-resistant properties.

Objective of the present invention is to provide a process for manufacturing a ballistic-resistant moulded article, whereby the ballistic performance of the article varies less with position on the moulded article than the known moulded article.

This objective is achieved with a process for the manufacture of a ballistic-resistant moulded article as defined in claim 1.

With the process according to the invention, a moulded article is produced with less variation in ballistic performance between positions on the moulded article, than moulded articles produced with the process according to US 4,613,535. Moulded articles may for instance show variation in areal density over their surface. The process according to the invention has the additional advantage that such variation in areal density does not result in an undesirably large variation in anti-ballistic performance, which is the case for articles produced with the known process.

Moreover, when designing anti-ballistic articles, such as a helmet for instance, a safety factor is normally used. Such a safety factor is multiplied with the standard deviation of experimentally obtained values, and the result subtracted from the average to obtain the design value. Since the process according to the invention yields moulded articles with less variation in anti-ballistic properties - and therefore a lower standard deviation - than the state of the art process, a moulded article according to the invention gives a product with a higher Vo value. Vo is the maximum speed of a bullet hitting a target without penetrating this target. This is seen as a more reliable and better anti-ballistic performance. An additional advantage is that due to the higher reliability, cost may be saved, for instance by using less material. Especially in the event of curved surfaces, a very high reliability is obtained.

Isostatic pressurizing means are herein intended to mean pressurizing means which are able to subject a body to equal pressure from every side. In a preferred embodiment of the process according to the invention, the isostatic pressurizing means comprise a container filled with a pressurizing liquid, and means to pressurize the liquid to the desired consolidating pressure level. The container may for instance be provided in the form of an autoclave, known per se, which autoclave is, according to the invention filled with a suitable pressurizing liquid, such as oil and/or water, of which water is preferred because it is readily available and non hazardous. Suitable means to pressurize the liquid for instance include a pump, which can provide the liquid under pressure to the container. The skilled person may easily envisage other solutions within the scope of the invention. The use of water does not practically limit the available temperature range for consolidating the stack, since consolidating is carried out at high to very high pressures, at which level the boiling temperature of water is significantly above 100°C.

An additional advantage of the process according to the invention is that moulded articles may be produced at a fraction of the cost of known processes, which known processes make use of an autoclave as pressurizing means, or of pressure platens, such as is the case for the process described in US 4,613,535.

In the process according to the invention the term "monolayer" of unidirectional reinforcing fibers refers to a of unidirectionally oriented reinforcing fibers and a matrix material that basically holds the reinforcing fibers together. A sheet comprising monolayers of unidirectional reinforcing fibers and a matrix material comprises at least 2 monolayers, whereby each monolayer comprises unidirectionally aligned fibers, and whereby the fiber direction is a monolayer is at an angle to the fiber direction in an adjacent monolayer. In the stack, the fiber direction in subsequent monolayers may be in 0/90 ° fashion or in -45/+45 fashion. The term "unidirectionally oriented reinforcing fibers" refers to reinforcing fibers in one plane that are essentially oriented in parallel. "Reinforcing fiber" here means an elongate body whose length dimension is greater than the transverse dimensions of width and thickness. The term "reinforcing fiber" includes a monofilament, a multifilament yarn, a tape, a strip, a thread, a staple fiber yarn and other elongate objects having a regular or irregular cross-section. For application of the fibers in ballistic-resistant moulded articles it is essential that the fibers be ballistically effective, which, more specifically, requires that they have a high tensile strength, a high tensile modulus and/or high energy absorption. Such fibers are in the context of this application also referred to as anti-ballistic fibers. It is preferred for the reinforcing fibers in the monolayer of the invention have a tensile strength of at least about 1.2 GPa and a tensile modulus of at least 40 GPa.

Suitable reinforcing fibers with such a high tensile strengh are, fibers of, for example, polyolefins, which are highly oriented, such as obtained, for example, by a gel spinning process. The reinforcing fibers preferably have a tensile strength of at least 1.6 GPa, more preferably at least 2 GPa, even more preferably at least 2.5 GPa or most preferably at least 3 GPa. The advantage of these fibers is that they have very high tensile strength, so that they are in particular very suitable for use in lightweight ballistic-resistant articles.

Suitable polyolefins are in particular homopolymers and copolymers of ethylene and propylene, which may also contain small quantities of one or more other polymers, in particular other alkene-1-polymers.

Good results are obtained if linear polyethylene (PE) is selected as the polyolefin. Linear polyethylene is herein understood to mean polyethylene with less than 1 side chain per 100 C atoms, and preferably with less than 1 side chain per 300 C atoms; a side chain or branch generally containing at least 10 C atoms. The linear polyethylene may further contain up to 5 mol% of one or more other alkenes that are copolymerisable therewith, such as propene, butene, pentene, 4-methylpentene, octene. Preferably, the linear polyethylene is of high molar mass with an intrinsic viscosity (IV, as determined on solutions in decalin at 135°C) of at least 8 dl/g. Such polyethylene is also referred to as ultra-high molar mass polyethylene. Intrinsic viscosity is a measure for molecular weight that can more easily be determined than actual molar mass parameters like Mn and Mw. There are several empirical relations between IV and Mw, but such relation is highly dependent on molecular weight distribution. Based on the equation Mw = 5.37 x 104 [IV] 1.37 (see EP 0504954 A1) an IV of 8 dl/g would be equivalent to Mw of about 930 kg/mol, respectively.

High performance polyethylene (HPPE) fibers consisting of polyethylene filaments that have been prepared by a gel spinning process, such as described, for example, in GB 2042414 A or WO 01 /73173, are preferably used as anti ballistic, or reinforcing fiber. This results in a very good anti-ballistic performance per unit of weight. A gel spinning process essentially consists of preparing a solution of a linear polyethylene with a high intrinsic viscosity, spinning the solution into filaments at a temperature above the dissolving temperature, cooling down the filaments to below the gelling temperature, such that gelling occurs, and stretching the filaments before, during or after the removal of the solvent.

The term binder refers to a material that binds or holds the reinforcing fibers together in the sheet comprising monolayers of unidirectionally oriented reinforcing fibers, by impregnating and/or embedding the fibers with a matrix material, e.g. with a polymer melt, a solution or a dispersion of a polymeric material in a liquid. Preferably, matrix material is homogeneously distributed over the entire surface of the monolayer, whereas a bonding strip or bonding fibers may be applied locally. Suitable binders are described in e.g. EP 0191306 B1, EP 1170925 A1, EP 0683374 B1 and EP 1144740 A1.

The matrix material is a thermoplastic material. The elongation at break of the matrix material is preferably greater than the elongation of the fibers. The binder preferably has an elongation of 2 to 600%, more preferably an elongation of 4 to 500%. Suitable thermoplastic matrix materials are enumerated in, for example, WO 91/12136 A1 (pages 15-21). Polyurethanes, polyvinyls, polyacrylics, polyolefins or thermoplastic elastomeric block copolymers such as polyisopropene-polyethylene-butylene-polystyrene or polystyrene-polyisoprene-polystyrene block copolymers are preferably selected as matrix material. The binder consists of a thermoplastic polymer, which binder preferably completely coats the individual filaments of said reinforcing fibers in a monolayer, and which binder has a tensile modulus (determined in accordance with ASTM D638, at 25° C) of at least 250 MPa, more preferably of at least 400 MPa. Such a binder results in high flexibility of a sheet comprising a monolayer, and of a high enough stiffness in a consolidated stack.

In the process according to the invention a stack is formed by stacking 2 or more sheets, comprising monolayers of unidirectional anti-ballistic fibers and a matrix material whereby tn the stack, the fiber direction in a monolayer is preferably at an angle α to the fiber direction in an adjacent layer, whereby α is preferably between 5 and 90°, more preferably between 45 and 90° and most preferably between 75 and 90°. The ballistic resistant article according to the invention comprises at least 2 sheets comprising monolayers of unidirectional anti-ballistic fibers and a matrix material. Preferably the ballistic resistant article according to the invention comprises at least at least 40 unidirectional monolayers, more preferably at least 80 unidirectional monolayers, even more preferably at least 120 unidirectional monolayers and most preferably at least 160 unidirectional monolayers.

In a preferred embodiment of the process, the obtained stack is placed in a flexible cover that is substantially impervious to the pressurizing liquid, prior to step d), wherein consolidating of the stack takes place. By wrapping the stack in such a flexible cover, the pressure developed by the pressurizing liquid is transmitted isotropically to the surfaces of the stack, including its top surface, bottom surface, and lateral surface. This preferred embodiment distributes the pressure more homogeneously over the moulded article, substantially independent of the material aerial density variation. An additional advantage is that the articles obtained by the invented method also show a more homogeneous translucency. Translucency can easily be detected by illuminating the moulded article from one side with a suitable light source.

A further special embodiment of the present invention relates to the event where the 'reinforcing fiber' is a tape or a strip and the tape or strip is formed into a material sheet. Such material sheet may suitably be used in the process according to the invention, and such material sheet may comprise woven fabrics of any structure. Suitable woven fabric structures may include plain weave, twill weave, basket weave, satin weave, crowfoot weave, and others. Particularly preferred is a material sheet, wherein the woven fabric has a plain weave structure. Such a structure offers a stable material sheet, which is easily processed in the process according to the invention. Also, this embodiment shows excellent antiballistic performance. Another preferred embodiment of the material sheet comprises a woven fabric having a twill weave structure preferably with an interlacing frequency ranging from 3-30:1, and more preferably ranging from 7 - 21:1. An interlacing frequency of x:1 means that a warp (tape or strip) crosses over x weft (tape or strip).

The tape or strip preferably is made from a polyolefin, more preferably from a linear polyethylene, most preferably from a high performance polyethylene.

Width of the tape or strip preferably is at least 5 mm, more preferably at least 10 mm, even more preferably at least 20 mm, most preferably at least 30 mm. In principle there is no limitation to the width, but for practical purposes will generally be less than 500mm, preferably less than 250mm.

Thickness of the tapes or strips preferably is at least 5µm, more preferably at least 8µm, even more preferably at least 16µm, most preferably at least 20µm. Thickness of the tapes or strips preferably is at most 120µm, more preferably at most 50µm, most preferably at most 29µm.

The areal density of the moulded articles depends on the desired level of protection, and can vary between broad ranges. Preferably, the areal density is between 2 and 40 kg/m². Below 2 kg/m², the level of protection is less optimal for most threats, whereas above 40 kg/m² the total weight of the moulded article will often be too high, especially for body protection, such as helmets. The range between 5 and 10 kg/m² is a preferred range for protection against hand guns and the like, and such articles may be produced at relatively low pressures, for instance below 7 MPa, and even down to 2 MPa.

According to another preferred process of the invention, the stack is placed in a mould, prior to step d), wherein consolidating of the stack takes place, and the mould is at least partly pressurized by the pressurizing means. The mould comprises at least one mould part in the form of the shaped article - either conforming with the top surface and/or the bottom surface of the stack - and/or a peripheral mould part. The fixed mould parts do not transmit the pressure of the pressurizing liquid onto the corresponding surface of the stack. Preferably, the process according to the invention uses a mould, designed such that the lateral surfaces of the stack are not substantially pressurized. This may more preferably be accomplished by a mould comprising at least one mould part in the form of the shaped article, and a peripheral mould part that is fixed, such that it does not transmit the pressure of the pressurizing means onto the lateral surfaces of the stack. In this preferred embodiment, the isostatic pressure is in large part transmitted to the top surface of the moulding only.

When using a male or female mould, and after the stack has been positioned onto the mould, the stack is covered with a flexible cover, and sealed around the peripheral edge of the mould, such that substantially no water ingress occurs. Subsequently the stack is placed in an isostatic pressurizing means, such as a container, and consolidated under temperature and pressure into a moulded article, i.e. a curved moulded article by supplying pressurized liquid to the container. In the case the matrix material is a thermoplastic polymer, consolidating is performed by cooling the stack after melting of the thermoplastic polymer. After consolidating, a consolidated stack is obtained, by which is meant that the monolayers are firmly attached to one another in the stack. This prevents delamination under normal use.

According to the invention, the temperature during consolidating is controlled by the temperature of the pressurizing liquid. This obviates the need for a heatable mould, which reduces cost significantly. Moreover, if using a mould in a preferred embodiment of the process, such a mould can be made much less sturdy, since the mould is loaded less severe than when using pressure platens for instance. Although not necessary, the use of a heatable mould in the process of the invention may have advantages.

Compression at an elevated temperature is intended to mean that the moulded article is subjected to the given pressure for a particular compression time at a compression temperature above the softening or melting point of the plastic matrix material and below the softening or melting point of the fibers. The required compression time and compression temperature depend on the kind of fiber and the binder material and on the thickness of the moulded article and can be readily determined by one skilled in the art. The temperature during melting generally is chosen below the temperature at which the anti-ballistic fiber loses its high mechanical properties due to e.g. melting. Preferably the temperature is at least 15 °C, more preferably at least 10°C and even more preferably at least 5°C below the melting temperature of the fiber. In case the reinforcing fiber does not exhibit a clear melting temperature, the temperature at which the fiber starts to lose its mechanical properties should be read instead of melting temperature. The temperature at which the fiber starts to lose its mechanical properties is in this application referred to as softening temperature. In the case of e.g. HPPE fibers, generally having a melting temperature of 155°C, a compression temperature preferably below 145°C, more preferably below 135°C generally will be chosen. The minimum temperature generally is chosen such that a reasonable speed of consolidation is obtained. In this respect 50°C is a suitable lower temperature limit, preferably this lower limit is at least 75°C, more preferably at least 95°C, most preferably at least 115°C.

The pressure during consolidating preferably is at least 10 MPa, more preferably at least 13 MPa, even more preferably at least 20 MPa and most preferably at least 25 MPa. In this way a better anti-ballistic performance is achieved. The process according to the invention readily allows to produce such high to very high pressure levels. The use of isostatic pressurizing means not only allows to obtain a good ballistic resistance, but the level of protection in particular shows less variation over the volume of the moulded article. The difference with the known process is particularly apparent for moulded articles with intricate (curved) shapes.

The optimum time for consolidation generally ranges from 5 to 120 minutes, depending on conditions such as temperature, pressure and part thickness and can be verified through routine experimentation.

Cooling under pressure is intended to mean that pressure is (at least partly) maintained during cooling at least until a temperature level whereby the structure of the moulded article can no longer relax under atmospheric pressure so that its anti-ballistic performance cannot decrease. This temperature is easily established by one skilled in the art. Preferably cooling is performed while maintaining the consolidating pressure. This yields a higher anti-ballistic performance. In the case of polyethylene fibers, cooling is done until the moulded article reaches a temperature of at most 80 °C, preferably at most 65 °C, more preferably at most 50 °C. As soon as the moulded article has reached this temperature the container and/or mould can be opened and the moulded article is released from the container and/or mould. Possible debris is subsequently cut from the moulded article. Moreover the moulded article may further be processed through known mechanical techniques as sawing, grinding, drilling to the desired final dimensions.

The ballistic resistarlt article can comprise a further layer, herein after referred to as further sheet, of material selected from the group consisting of ceramic, metal, preferably steel, aluminum, magnesium titanium, nickel, chromium and iron or their alloys, glass and graphite, or combinations thereof. The further sheet of material may be incorporated in the stack and formed with the stack. It is also possible to use the further sheet of material as mould part, provided it has sufficient stiffness. A particularly preferred material for the further sheet is metal. In such case the metal in the metal sheet preferably has a melting point of at least 350 °C, more preferably at least 500 °C, most preferably at least 600 °C. Suitable metals include aluminum, magnesium, titanium, copper, nickel, chromium, beryllium, iron and copper including their alloys as e.g. steel and stainless steel and alloys of aluminum with magnesium (so-called aluminum 5000 series), and alloys of aluminum with zinc and magnesium or with zinc, magnesium and copper (so-called aluminum 7000 series). In said alloys the amount of e.g. aluminum, magnesium, titanium and iron preferably is at least 50 wt%. Preferred metal sheets comprising aluminum, magnesium, titanium, nickel, chromium, beryllium, iron including their alloys. More preferably the metal sheet is based on aluminum, magnesium, titanium, nickel, chromium, iron and their alloys. This results in a light antiballistic article with a good durability. Even more preferably the iron and its alloys in the metal sheet have a Brinell hardness of at least 500. Most preferably the metal sheet is based on aluminum, magnesium, titanium, and their alloys. This results in the lightest antiballistic article with the highest durability. Durability in this application means the lifetime of a composite under conditions of exposure to heat, moisture, light and UV radiation. Although the further sheet of material may be positioned anywhere in the stack of monolayers, the preferred ballistic resistant article is characterized in that the further sheet of material is positioned at the outside of the stack of monolayers, most preferably at least at the strike face thereof.

The ballistic resistant article preferably comprises a further sheet of the above described material having a thickness of at most 75 mm. Preferably the maximum thickness of the further sheet of material is at most 50 mm, more preferably at most 25 mm, even more preferably at most 10 mm and most preferably at most 5 mm. This results in the best balance between weight and antiballistic properties. Preferably also, the thickness of the further sheet, preferably a metal sheet, is at least 0.25 mm, more preferably at least 0.5 mm, and most preferably at least 0.75 mm. This results in even better antiballistic performance.

The further sheet may optionally be pre-treated in order to improve adhesion with the multilayer material sheet. Suitable pre-treatment of the further sheet includes mechanical treatment e.g. roughening or cleaning the surface thereof by sanding or grinding, chemical etching with e.g. nitric acid and laminating with polyethylene film.

In another alternative of the ballistic resistant article, bonding layer, e.g. an adhesive, may be applied between the further sheet and the multilayer material sheet. Such adhesive may comprise an epoxy resin, a polyester resin, a polyurethane resin or a vinylester resin. The bonding layer preferably has a low weight, compared to the total weight of the moulded article. Preferably, the weight of the bonding layer is less than 30%, more preferably less than 20%, even more preferably less than 10%, and most preferably less than 5% of the total weight of the moulded article. In another preferred embodiment, the bonding layer may further comprise a woven or non woven layer of inorganic fiber, for instance glass fiber or carbon fiber. It is also possible to attach the further sheet to the multilayer material sheet by mechanical means, such as e.g. screws, bolts and snap fits. In the event that the ballistic resistant article according to the invention is used in ballistic applications where a threat against so-called armour piercing (AP) bullets may be encountered the further sheet preferably comprises a metal sheet covered with a ceramic layer. In this way an antiballistic article is obtained with a layered structure as follows: ceramic layer/metal sheet/at least two unidirectional sheets with the direction of the reinforcing fibers in the unidirectional sheet at an angle α to the direction of the reinforcing fibers in an adjacent unidirectional sheet. Suitable ceramic materials include e.g. alumina oxide, titanium oxide, silicium oxide, silicium carbide and boron carbide. The thickness of the ceramic layer depends on the level of ballistic threat but generally varies between 2 mm and 30 mm. This ballistic resistant article is preferably positioned such that the ceramic layer faces the ballistic threat.

During the forming of the stack in the process according to the invention optionally at least one layer of fabric of an anti-ballistic fiber may be placed on the 2 or more sheets comprising monolayers of unidirectional anti-ballistic fibers and matrix material. This layer of fabric of an anti-ballistic fiber is preferably positioned in such a way on the stack that the fabric is closest to a strike face of the moulded article obtained with the process. The strike face of the moulded article is the side of the product facing the ballistic impact.

Furthermore the process according to the invention yields helmets with a weight -expressed as areal density- of less then 25 kg/m² having a Vo against AK47 MSC bullets of more than 650 m /s. Preferably such helmet is based on polyethylene fiber. Such helmet gives the best protection against AK47 bullets. More preferably the invention yields helmets with a weight less then 20 kg/m², more preferably less then 18 kg/m² and even more preferably less then 16 kg/m² and most preferably less then 14 kg/m² and having a Vo against AK47 MSC bullets of more than 650m/s, more preferably having a Vo of more than 660m/s.

The process according to the invention yields a moulded article with less variation in ballistic performance between positions on the curved moulded article, than moulded articles produced by a process according to US 4,613,535. Curved moulded articles obtainable by the process include e.g. helmets, helmet shells, curved panels, cones and domes. In this application curved in a curved object means that if such curved object is placed on a flat surface, at least one part of the curved object protrudes at least 3cm above the said flat surface. More preferably at least one part of the curved object protrudes at least 5cm above the said flat surface, even more preferably at least one part of the curved object protrudes at least 8cm above the said flat surface, most preferably at least one part of the curved object protrudes at least 12cm above the said flat surface.

The curved moulded articles obtainable by the process according to the invention are very suitable for use in the manufacture of anti ballistic articles.

The present invention will now be further elucidated by the following examples and comparative experiments, without being limited thereto.

### Example I

A stack was made of 200 monolayers comprising unidirectionally aligned fibers, whereby the fiber direction in a monolayer is at an angle of 90 ° with respect to an adjacent monolayer. Each monolayer comprising gel spun polyethylene fibers having a strength of 35 cN/dtex and 19 wt% of a polyurethane matrix and whereby the areal density of the monolayer is 63 g/m². The complete stack was positioned between two mould parts in the form of a helmet and preformed in a standard press at room temperature. The preformed stack was then positioned top down into a female mould part in the form of the helmet to be produced. The stack and female mould were then covered with a deformable elastic material, such as to make it substantially watertight. The assembly was then placed in a hydroclave, filled with water. The temperature of the water was about 120-130°C. The stack was retained in the hydroclave until the temperature at the centre of the stack was about 115-125°C, and the stack was kept at this temperature for 15 min. The water pressure was about 20 MPa. After consolidating the stack, it was cooled to a temperature of 60°C at the same water pressure, and finally removed from the hydroclave, and demoulded.

### Comparative Experiment A

A stack was made of 200 monolayers comprising unidirectionally aligned fibers, whereby the fiber direction is a monolayer is at an angle of 90 ° with respect to an adjacent monolayer. Each monolayer comprising gel spun polyethylene fibers having a strength of 35 cN/dtex and 19 wt% of a polyurethane matrix and whereby the areal density of the monolayer is 63 g/m². The complete stack was positioned between two steel mould parts in the form of a helmet and pressurized in a standard press. The temperature of the mould was about 125-130°C. The stack was retained in the mould until the temperature at the centre of the stack was 120°C. Subsequently, the pressure was increased to a compressive pressure of about 20 MPa, and the stack was kept under this pressure and temperature for 15 min. Next, the stack was cooled to a temperature of 60°C at the same compressive pressure.

### Test Procedure:

The helmets obtained were fired at in accordance with the procedure set out in NIJ 01.08.01. The V₅₀ determination was done according to Stanag 2920. Use was made of a bullet referred to as AK-47 Mild Steel Core (MSC) point (i.e. dimensions 7.62x39 mm; manufactured by Sellier & Belliot, Czech Republic).

### Results:

The obtained V₅₀ values, including their standard variation are given in Table 1. The stated V₅₀ values were calcutated from the total areal density of the ballistic-resistant moulded article. Also stated are the V₀ values, calculated for a given safety factor, and indicative of the velocity at which all bullets will be stopped by the helmet.

**Table 1: Results of anti-ballistic tests**

| Parameter / Sample | Example I | Comparative Exp. A |
|---|---|---|
| V₅₀ (m/s) | 691 | 808 |
| Standard deviation on V₅₀ (m/s) | 4,9 | 40,3 |
| Safety Factor | 4 | 4 |
| V₀ (m/s) | 672 | 647 |

The results indicate that the panels produced in the hydroclave have a much lower standard deviation than the panels produced by the known compression moulding process. This means that the process according to the invention yields helmets with a higher Vo value at a given weight of the product. Due to the fact that pressure is applied isostatically at least on one surface of the moulded article, a more uniform performance is obtained. The helmet according to the invention therefore provides better and more reliable protection at a certain speed of bullets then the known helmet.

## Claims

1. Process for the manufacture of a ballistic-resistant moulded article comprising the steps of
a) forming a stack by stacking 2 or more sheets comprising monolayers of unidirectional linear polyethylene fibers with an intrinsic viscosity of at least 8 dl/g measured in decalin at 135°C and at most 30 Wt% of a matrix material that consists of a thermoplastic polymer with a tensile modulus of at least 250 MPa, determined in accordance with ASTM D638, at 25°C, and whereby in the stack, the direction of the reinforcing fiber is at an angle α to the fiber direction in an adjacent monolayer,
b) providing isostatic pressurizing means;
c) placing the stack in the isostatic pressurizing means;
d) consolidating the stack, at an elevated temperature and a pressure of at least 10 MPa into the ballistic-resistant moulded article.

2. Process according to claim 1, wherein the isostatic pressurizing means comprise a container filled with a pressurizing liquid, and means to pressurize the liquid to the desired consolidating pressure level.

3. Process according to claim 2, wherein prior to step d), the stack is placed in a flexible cover that is substantially impervious to the pressurizing liquid.

4. Process according to any one of the preceding claims, wherein the stack is placed onto a mould before at least partly pressurizing the mould by the pressurizing means in step d).

5. Process according to claim 4, wherein the mould is designed such that the lateral surfaces of the stack are not substantially pressurized.

6. Process according to claim 5, wherein the mould comprises at least one mould part in the form of the shaped article, and a peripheral mould part that is fixed, such that it does not transmit the pressure of the pressuring means onto the lateral surfaces of the stack.

7. Process according to any one of the preceding claims, wherein the article is a curved article.

## Patentansprüche

1. Verfahren zur Herstellung eines schusssicheren Formkörpers, bei dem man
a) aus zwei und mehr Lagen, umfassend Monoschichten aus unidirektionalen Fasern aus linearem Polyethylen mit einer in Decalin bei 135°C gemessenen intrinsischen Viskosität von mindestens 8 gl/g, einen Stapel mit höchstens 30 Gew.-% eines Matrixmaterials, bestehend aus einem thermoplastischen Polymer mit einem gemäß ASTM D638 bei 25°C bestimmten Zugmodul von mindestens 250 MPa, bildet, wobei im Stapel die verstärkende Faser unter einem Winkel α zur Faserrichtung einer angrenzenden Monoschicht ausgerichtet ist,
b) isostatische Pressmittel bereitstellt,
c) den Stapel in die isostatischen Pressmittel einbringt,
d) den Stapel bei einer erhöhten Temperatur und einem Druck von mindestens 10 MPa zum schusssicheren Formkörper verfestigt.

2. Verfahren nach Anspruch 1, bei dem die isostatischen Pressmittel neben einem mit Druckflüssigkeit gefüllten Behälter Mittel umfassen, die die Druckflüssigkeit auf den erwünschten Verfestigungsdruck bringen.

3. Verfahren nach Anspruch 2, bei dem man vor Schritt d) den Stapel in eine flexible Hülle einbringt, die gegenüber der Druckflüssigkeit im Wesentlichen undurchlässig ist.

4. Verfahren nach einem der vorhergehenden Ansprüche, bei dem man den Stapel in ein Formwerkzeug einbringt und dann das Formwerkzeug mit den Pressmitteln gemäß Schritt d) zumindest teilweise unter Druck setzt.

5. Verfahren nach Anspruch 4, bei dem das Formwerkzeug so ausgeführt ist, dass die Seitenflächen des Stapels im Wesentlichen keinem Druck ausgesetzt werden.

6. Verfahren nach Anspruch 5, bei dem das Formwerkzeug neben mindestens einem Werkzeugteil in Form des Formkörpers ein umlaufendes Werkzeugteil umfasst, welches so fixiert ist, dass es den Druck der Pressmittel nicht auf die Seitenflächen des Stapels weiterleitet.

7. Verfahren nach einem der vorhergehenden Ansprüche, bei dem es sich um einen gekrümmten Formkörper handelt.

## Revendications

1. Procédé de fabrication d'un article moulé résistant aux balles, consistant à :
a) former une pile en empilant 2 feuilles ou plus comprenant des monocouches de fibres de polyéthylène linéaire unidirectionnel ayant une viscosité intrinsèque d'au moins 8 dl/g, mesurée dans de la décaline à 135 °C, et au maximum 30 % en poids d'un matériau de matrice consistant en un polymère thermoplastique ayant un module de traction d'au moins 250 MPa, déterminé selon ASTM D638, à 25 °C, et, dans la pile, la direction de la fibre de renforcement étant un angle α par rapport à la direction de la fibre dans une monocouche adjacente ;
b) fournir un moyen de mise sous pression isostatique ;
c) placer la pile dans le moyen de mise sous pression isostatique ;
d) consolider la pile à une température élevée et à une pression d'au moins 10 MPa pour produire l'article moulé résistant aux balles.

2. Procédé selon la revendication 1, dans lequel le moyen de mise sous pression isostatique comprend un contenant rempli d'un liquide de mise sous pression, et un moyen de mise sous pression du liquide jusqu'au niveau de pression de consolidation désiré.

3. Procédé selon la revendication 2, dans lequel, avant l'étape d), la pile est placée dans une enveloppe flexible qui est sensiblement imperméable au liquide de mise sous pression.

4. Procédé selon l'une quelconque des revendications précédentes, dans lequel la pile est placée sur un moule avant la mise sous pression au moins partielle du moule par le moyen de mise sous pression dans l'étape d).

5. Procédé selon la revendication 4, dans lequel le moule est conçu de façon à ce que les surfaces latérales de la pile ne soient pas sensiblement mises sous pression.

6. Procédé selon la revendication 5, dans lequel le moule comprend au moins une partie de moule sous la forme de l'article formé, et une partie de moule périphérique qui est fixe, de façon à ne pas transmettre la pression du moyen de mise sous pression aux surfaces latérales de la pile.

7. Procédé selon l'une quelconque des revendications précédentes, dans lequel l'article est un article courbe.
